# EUROPÄISCHE PATENTSCHRIFT

(11) **EP 0 720 764 B1**
(45) Veröffentlichungstag und Bekanntmachung des Hinweises auf die Patenterteilung: **26.11.1997**
(21) Anmeldenummer: 94923649.1
(22) Anmeldetag: 12.08.1994
(51) Int. Cl.: G07B 15/00, G08G 1/0967

(54) **ANLAGE ZUR ERFASSUNG DER VON EINEM KRAFTFAHRZEUG ZURÜCKGELEGTEN WEGSTRECKE**
SYSTEM FOR MEASURING THE DISTANCE TRAVELLED BY A MOTOR VEHICLE
INSTALLATION POUR RELEVER LA DISTANCE PARCOURUE PAR UN VEHICULE AUTOMOBILE

(30) Priorität: 14.08.1993 DE 4327385
(43) Veröffentlichungstag der Anmeldung: 10.07.1996
(73) Patentinhaber: BÄHRING, Horst Dr., D-64367 Mühltal (DE)
(72) Erfinder: BÄHRING, Horst Dr., D-64367 Mühltal (DE)
(74) Vertreter: Pöhner, Wilfried Anton, Dr.
(86) Internationale Anmeldenummer: DE9400928
(87) Internationale Veröffentlichungsnummer: WO9505644

(56) Entgegenhaltungen:
- EP-A- 0 323 326
- EP-A- 0 508 405
- WO-A-91/08557
- DE-A- 4 112 472
- FR-A- 2 566 349
- FR-A- 2 567 664
- FR-A- 2 680 877
- 41ST IEEE VEHICULAR TECHNOLOGY CONFERENCE, 19. Mai 1991, Seiten 805-811, XP260280; C.M. WALKER et al.: 'Automatic vehicle identification (AVI) technology design considerations for highway applications'
- VEHICLE NAVIGATION & INFORMATION SYSTEMS CONFERENCE PROCEEDINGS, P-253, PART 2, Oktober 1991, Seiten 957-967, XP357200; R.L. SABOUNGHI : 'Intelligent vehicle highway system - The universal close-range road/vehicle communication system concept - The enhanced AVI and its CVO applications'

## Beschreibung

Die Erfindung bezieht sich auf eine Anlage zur Erfassung der von einem Kraftfahrzeug, in dem ein Wegstreckenmesser vorhanden ist, auf einer gebührenpflichtigen, mehrspurigen Straße zurückgelegten Wegstrecke mit außerhalb des Fahrzeugs befindlichen Signalgebern sowie einem Empfänger zur Aufnahme drahtloser Signale und einer Erfassungseinheit, die im Fahrzeug angeordnet sind.

Im Rahmen der seit längerem diskutierten Einführung einer fahrstreckenabhängigen Autobahnbenutzungsgebühr sind verschiedene Vorschläge für Verfahren zur Gebührenerhebung bekannt geworden. Neben den in Staaten wie Italien und Frankreich üblichen Mautstationen, an denen die Kraftfahrer anhalten und die Gebühr für die zurückgelegte Fahrtstrecke entrichten, wurden selbsttätig arbeitende Anlagen bekannt, bei denen die Kennzeichen oder andere Merkmale der Kraftfahrzeuge an Mautstationen durch Kameras oder andere Sensoren erfaßt werden. Die Schrift Vehicle Navigation & Information Systems Conference Proceedings, P-253, Part 2, p. 957-967, publ. by Society of Automotive Engineers, Narrendale, PA, 1991 offenbart eine Anlage zur Erfassung der von einem Kraftfahrzeug, in dem ein Wegstreckenmesser vorhanden ist, auf einer gebührenpflichtigen, mehrspurigen Straße zurückgelegten Wegstrecke mit außerhalb des Fahrzeugs befindlichen Signalgebern sowie einem Empfänger zur Aufnahme drahtloser Signale und einer Erfassungseinheit, die im Fahrzeug angeordnet sind, wobei
- der Signalgeber (4) ein Positionssatellit ist
- und die Erfassungseinheit (7) die zurückgelegte Wegstrecke und/oder die angefallenen Gebühren ermittelt und speichert.
In einer zentralen Rechenanlage werden die auf den einzelnen Autobahnabschnitten zurückgelegten Fahrstrecken gespeichert und die z.B. monatlich oder jährlich zu entrichtende Gebühr errechnet. Dabei kann der Gebührensatz von der Fahrzeuggeschwindigkeit abhängig sein (DE 41 12 472 Al) und somit als Instrument der Verkehrsleitung dienen.

Als nachteilig ist anzusehen, daß an den konventionellen Mautstationen Zeitverluste entstehen, während die automatische Erkennung eines Kraftfahrzeuges aufgrund des technischen Aufwandes hohe Investitionskosten erfordert, speziell wenn eine Erfassung des Fahrzeugs in kurzen Streckenabständen vorgesehen ist.

Ferner ist aus der FR 2 680 877 Al ein System zur Positionsbestimmung bekannt, bei dem mit einer im Fahrzeug angeordneten Empfangseinheit drahtlose Signale von entlang einer Straße angeordneten Signalgebern beim Vorbeifahren aufgenommen werden. Mittels einer Auswerteeinheit werden die empfangenen Daten, z.B. Straßennummern und derzeitige Fahrzeugposition für den Fahrzeugführer aufbereitet.

Die Schrift 41st IEEE Vehicular Technology Conference, 19.05.91, Seiten 805-811, XP000260280, Walker : 'Automatic vehicle identification (AVI) technology design considerations for highway applications' offenbart eine Anlage zur Erfassung der von einem Kraftfahrzeug, in dem ein Wegstreckenmesser vorhanden ist, auf einer gebührenpflichtigen, mehrspurigen Straße zurückgelegten Wegstrecke mit außerhalb des Fahrzeugs befindlichen Signalgebern sowie einem Empfänger zur Aufnahme drahtloser Signale und einer Erfassungseinheit, die im Fahrzeug angeordnet sind, wobei
die Signalgeber (4) in oder an der Straße montiert sind und der Empfänger (6) beim Vorbeifahren an einem Signalgeber (4) die Signale aufnimmt
- und die Erfassungseinheit (7) die zurückgelegte Wegstrecke und/oder die angefallenen Gebühren ermittelt und speichert.

Hiervon ausgehend liegt der Erfindung das Problem zugrunde, eine Anlage zur Wegstreckenerfassung so zu gestalten, daß ein Anhalten an Mautstellen überflüssig, jedoch eine preisgünstige, fehlerarme Datenaufnahme und -speicherung möglich ist und eine Erhöhung der Aufnahmekapazität mehrspuriger Straße erfolgt.

Erfindungsgemäß wird das der Erfindung zugrunde liegende Problem durch die Merkmale des Anspruchs 1 gelöst.

Der Kerngedanke der Erfindung besteht darin, in oder an der mit Gebühren beaufschlagten Straße Signalgeber anzubringen und das Kraftfahrzeug mit einem Empfänger und einer Erfassungseinheit zu versehen, um anhand der vom Empfänger beim Vorbeifahren an einem Signalgeber erfaßten, drahtlosen Signale die Erfassungseinheit in Betrieb zu setzen und Wegstreckeninformationen und/oder die angefallenen Gebühren zu speichern. Die Erfassungseinheit wird bei der Einfahrt auf eine Autobahn oder eine andere, mit Gebühren beaufschlagte Straße durch die vom Empfänger aufgenommen Signale aktiviert und nach dem Verlassen dieser Straße (durch ein entsprechendes Signal oder das Fehlen von Signalen) selbsttätig abgeschaltet, so daß nur die auf der mit Gebühren beaufschlagten Wegstrecken erfaßt werden. Die jeweils zurückgelegten Entfernungen werden anhand der Art und/oder Zahl der empfangenen Signale und/oder mittels eines - gewöhnlich bereits im Fahrzeug vorhandenen - Wegstreckenmessers bestimmt und gespeichert. Falls eine Entfernungsmessung anhand der Art der Signale erfolgt, enthalten die Signale eine Information über die Positionierung der Signalgeber, während sich eine äquidistante Montage eignet, um die Zahl der passierten Signalgeber zur Wegstreckenerfassung heranzuziehen; als Vorteil ist anzusehen, daß der Empfänger - da er nur das Vorhandensein eines Signals detektieren muß - relativ einfach und preiswert herstellbar ist. Falls die Signalgeber eine Information über ihre Position, wie z.B. die Entfernung vom Autobahnbeginn ausstrahlen oder falls sie durchnumeriert sind und von der jeweiligen Nummer abhängige Signale abstrahlen und der Erfassungseinheit der Zusammenhang zwischen Nummer und Position - z.B. anhand einer Tabelle - bekannt ist, müssen sie nicht notwendigerweise äquidistant angeordnet werden. Als vorteilhaft ist bei einer Wegsteckenerfassung anhand der Art oder Zahl der Signale anzusehen, daß die Entfernungsbestimmung unabhängig von der Wegstrecken- oder Geschwindigkeitsmessung des Fahrzeugs erfolgt und somit Manipulationen schwer zugänglich ist. Der Empfänger und die Erfassungseinheit sind zweckmäßigerweise in einem stabilen, verplombten Behälter angeordnet, um sie gegen Manipulationen zu schützen.

Die Vorteile der Erfindung bestehen vornehmlich darin, daß eine fehlerfreie Erfassung der von einem Kraftfahrzeug auf einer mit Gebühren beaufschlagten Straße zurückgelegten Wegstrecke und/oder der angefallenen Gebühren möglich ist, wobei die Daten im jeweiligen Fahrzeug gespeichert werden und die Erhebung einer fahrstreckenabhängigen Straßen- und insbesondere Autobahnbenutzungsgebühr erlauben. Ein nachträglicher, preiswerter Einbau eines Empfängers und einer Erfassungseinheit in bereits vorhandene Kraftfahrzeuge ist problemlos möglich. Die zur Montage der Signalgeber erforderlichen Investitionskosten sind gering, da nur relativ wenige, in größerem Abstand angeordnete Signalgeber erforderlich sind.

Im speziellen können die Signalgeber, falls sie in auf- oder absteigender Reihenfolge durchnummeriert und äquidistant angeordnet sind, eine Information über ihre Nummer ausstrahlen, wobei die zurückgelegte Wegstrecke anhand der ersten und letzten erfaßten Nummer unschwer bestimmt werden kann. Diese Ausführungsform läßt sich, wie auch eine beliebige andere, in der ortsspezifischen variierende Signale ausgestrahlt werden, zusätzlich dazu nutzen, Falschfahrer zu erkennen und zu warnen. Hierzu wird durch die Erfassungseinheit Alarm ausgelöst und beispielsweise die Hupe des Fahrzeugs in Betrieb gesetzt, falls die Empfangseinheit die von den Signalgebern ausgestrahlten Daten in inverser Folge zu normalen Fahrtrichtung registriert.

Auf Autobahnen und Kraftfahrstraßen, sowie anderen, mit mehreren Fahrspuren in jeder Richtung versehenen Straßen ist häufig zu beobachten, daß die Mehrzahl der Kraftfahrzeuge auf der linken Fahrspur fahren. Falls mehr als zwei Fahrspuren vorhanden sind, wird gewöhnlich die am weitesten links liegende benutzt, während die weiter rechts verlaufenden Fahrbahnen weitgehend frei sind oder von nur wenigen Fahrzeugen, hauptsächlich Lastkraftwagen befahren werden. Die dichte Belegung der linken Fahrspuren hat neben einer erheblichen Verminderung der Aufnahmekapazität der Straße und einer nicht unbedeutenden Störung des Verkehrsflusses eine starke Erhöhung der Unfallgefahr zum nachteiligen Ergebnis. Um den Kraftfahrzeugführern einen Anreiz zu geben, vermehrt die rechte Fahrspur zu benutzen und die Unfallgefahr zu reduzieren, bietet sich an, die einzelnen Fahrspuren mit unterschiedlichen Gebührensätzen zu belasten. Eine Beaufschlagung der linken Fahrspur mit relativ zur rechten Fahrspur erhöhten Kosten hätte eine vermehrte Benutzung der rechten Spur, eine Verbesserung der Aufnahmekapazität der Autobahnen und eine Verminderung der Unfallgefahr zur vorteilhaften Folge. Daher werden zur nach Fahrspuren differenzierten Erfassung der Wegstrecken geeignete Ausgestaltungen der Erfindung vorgeschlagen. Die Unterscheidung der Fahrspuren erfolgt anhand der empfangenen Signale, wobei die Signalgeber auf den einzelnen Fahrspuren unterschiedliche Signale abstrahlen und/oder äquidistant, jedoch auf den unterschiedlichen Fahrspuren in abweichenden Abständen angeordnet sind und/oder mindestens eine Fahrbahn nicht mit Signalgebern versehen ist. Beim Vorbeifahren an einem Signalgeber erkennt der Empfänger anhand der Art des Signals und/oder des zwischen dem Empfang zweier Signale verstrichenen Zeitraums und der mit einem Geschwindigkeitsmesser erfaßten Geschwindigkeit des Kraftfahrzeugs und/oder anhand des Empfangs oder Fehlens von Signalen die Fahrspur und übermittelt der Erfassungseinheit eine der jeweiligen Fahrspur zugeordnete Wegstreckeninformation, wobei die zurückgelegte Entfernung anhand des im Fahrzeug montierten Wegstreckenmessers oder der Zahl der erfaßten Signalgeber bzw. von ihnen ausgestrahlter Positionsdaten bestimmt wird.

Bei äquidistant, jedoch auf den einzelnen Fahrbahnen in unterschiedlichen Abständen montierten Signalgebern ist als besonders vorteilhaft anzusehen, daß keine unterschiedlichen Signalgeber erforderlich sind, so daß sie relativ einfach aufgebaut und in großer Stückzahl preiswert in Serie hergestellt werden können.

Falls alle Fahrspuren mit Signalgebern versehen sind, sind die aus der hohen Zahl der Signalgeber resultierenden, nicht unerheblichen Investitionskosten als nachteilig anzusehen. Zur Verminderung der Kosten ist daher bevorzugt, mindestens eine, vorzugsweise die linke Fahrbahn nicht mit Signalgebern zu versehen. Die Signalgeber sind bevorzugt auf der rechten Fahrspur montiert, damit der Empfänger bei der Einfahrt anhand der Signale den Beginn der mehrspurigen Straße erkennt und analog beim Verlassen ihr Ende erfaßt. Zur Erfassung der auf der Fahrbahn ohne Signalgeber zurückgelegten Wegstrecken ist vorgeschlagen, sie anhand des Wegstreckenmessers des Fahrzeugs zu bestimmen. Alternativ ist möglich, die dort gefahrene Entfernung anhand der Signale des vor dem Erreichen dieser Fahrbahn zuletzt passierten und des nach dem Verlassen zuerst erfaßten Signalgebers zu bestimmen, wobei die jeweiligen Signalgeber eine Information über ihre Positionierung ausstrahlen.

Im speziellen ist, falls die Entfernungsmessung anhand der Zahl der erfaßten Signalgeber erfolgt, zur Wegerfassung auf einer Fahrspur ohne Signalgeber vorgeschlagen, daß der Empfänger der Erfassungseinheit, sobald das Kraftfahrzeug die mit Signalgebern versehene Spur verläßt, Signale eines mit den empfangenen Signalen synchronisierten Generators zuführt. Die Frequenz des Generators entspricht dem Quotienten aus der jeweiligen Geschwindigkeit und der Entfernung zweier - äquidistant angeordneter - Signalgeber. Die Erfassungseinheit zählt, falls kein Signal empfangen wird, die vom Generator abgegebenen Impulse und anderenfalls die Signalgeber, an denen vorbeigefahren wurde. Die zurückgelegte Entfernung entspricht dem Produkt aus der Summe der Impulse und dem Abstand der Signalgeber.

Falls die Wegstreckenerfassung auf einer Fahrbahn ohne Signalgeber anhand der Art der empfangenen Signale erfolgen soll, ist vorgeschlagen, die Signalgeber äquidistant anzuordnen, in auf- oder absteigender Folge zu numerieren und ihren Signalen eine Information über ihre Nummer aufzumodulieren. Fährt das Fahrzeug auf einer mit Signalgebern versehenen Spur, wird die Nummer des jeweils zuletzt erfaßten Signalgebers gespeichert und beim Vorbeifahren an dem nachfolgenden Signalgeber anhand der Differenz beider Nummern der Erfassungseinrichtung eine entsprechende Wegstreckeninformation zugeführt. Erreicht das Kraftfahrzeug die nicht mit Signalgebern versehene Fahrspur, bleibt die zuletzt erfaßte Nummer im Empfänger gespeichert. Beim Wiedereinscheren auf eine mit Signalgebern versehene Fahrspur wird die auf der zuvor benutzten, nicht mit Signalgebern versehenen Fahrspur zurückgelegte Entfernung anhand der Differenz der nunmehr empfangenen und der gespeicherten Nummer sowie der Abstände der Signalgeber bestimmt.

Falls eine Straße mit mehr als zwei Fahrspuren versehen ist, ist empfohlen, die vorgeschlagenen Merkmale miteinander zu kombinieren, um mindestens drei Fahrbahnen bei geringen Investitionskosten unabhängig voneinander erfassen zu können. Vorzugsweise die am weitesten links liegende Fahrbahn wird nicht mit Signalgebern versehen, während die Signalgeber auf den übrigen Spuren unterschiedliche Signale abstrahlen oder äquidistant, von Spur zu Spur jedoch in unterschiedlichen Abständen positioniert sind, wobei die Wegstrecke auf der nicht mit Signalgebern versehenen Fahrspur anhand der Geschwindigkeit des Fahrzeugs (bzw. der Zahl der durch einen Generator erzeugten Impulse) oder nach dem Erreichen einer mit Signalgebern versehenen Spur anhand der Signale erfaßt wird. Der Vorteil besteht darin, daß die auf den jeweiligen Fahrspuren zurückgelegten Wegstrecken einzeln erfaßbar sind, wobei die Investitionskosten relativ gering bleiben, da auf einer Fahrspur keine Signalgeber zu montieren sind.

In einer zur bisher geschilderten Anlage möglichen Alternativen ist der Einsatz von Signalgebern zur Erfassung der Fahrspuren nicht erforderlich. Statt dessen werden die drahtlosen Signale eines Positionssatelliten ausgewertet, die eine in hohem Maße präzise Ortung erlauben. Die Genauigkeit läßt erkennen, auf welcher Fahrspur sich das jeweilige Fahrzeug bewegt. Gleichermaßen sind zusätzlich mit Hilfe der Satellitenortung auch die zurückgelegte Wegstrecke und/oder - bei entsprechender Umrechnung - die angefallenen Gebühren ermittelbar.

Um die Gebühren in Abhängigkeit von der jeweiligen Geschwindigkeit zu erfassen und den Kraftfahrzeugführern einen Anreiz zur Reduzierung der Geschwindigkeit zu geben, bietet sich an, die Daten über die auf der Straße oder den einzelnen Fahrspuren zurückgelegten Wegstrecken zusammen mit der jeweiligen Kraftfahrzeuggeschwindigkeit zu speichern, wobei die Geschwindigkeitsmeßwerte beispielsweise dem bereits im Kraftfahrzeug vorhandenen Geschwindigkeitsmesser entnommen werden können. Diese Ausführungsform der Erfindung ermöglicht, von der Geschwindigkeit und/oder der benutzten Fahrbahn abhängige Gebühren zu erheben, wobei die bei Überschreitung einer Richtgeschwindigkeit bzw. für die Benutzung der linken Fahrbahn stark erhöhten Gebühren die Fahrzeugführer vermehrt zur Einhaltung der Richtgeschwindigkeit und/oder zur Benutzung der rechten Fahrbahn bewegen können.

Zur Reduzierung des Speicherplatzbedarfes der Erfassungseinheit erfolgt die Wegstreckenspeicherung zweckmäßigerweise nach Geschwindigkeitsintervallen differenziert, wobei eine typische Breite eines Geschwindigkeitsintervalls 10 km pro Stunde beträgt. Als vorteilhaft ist anzusehen, daß eine nachträgliche Änderung der (einer Tarifstufe zugeordneten) Intervallgrenzen unproblematisch möglich ist.

Die Geschwindigkeit kann vorteilhafterweise anhand der Zahl und/oder Art der empfangenen Signale und dem zwischen dem Empfang zweier Signale verstrichenen Zeitintervall erfaßt werden, wobei die Präzision und Manipulationssicherheit relativ zu einer mittels eines konventionellen Tachometers durchgeführten Messung entscheidend verbessert sind.

Mittels einer jeweils lokal gültigen, von den Signalgebern übertragenen und gespeicherten Richtgeschwindigkeit können weiter differenzierte Gebührensätze erhoben werden: z.B. kann die Richtgeschwindigkeit bei gebirgigen oder kurvigen Strecken höher als in der Ebene bzw. auf gerade verlaufenden Straßen sein, so daß die Kraftfahrer bei besonders unfallträchtigen Streckenabschnitten über eine reduzierte Richtgeschwindigkeit und - bei ihrer Überschreitung - stark erhöhte Gebühren zu einer verkehrsgerechten Fahrweise angehalten werden. Im Rahmen der Erhebung der Autobahnbenutzungsgebühr bietet sich neben einer Erfassung der Fahrspuren eine Speicherung der Autobahnnummer oder der Art der Strecke oder des Streckenabschnittes an, um beispielsweise bei besonders dicht befahrenen oder in gebirgigen Landschaften verlaufenden Strecken erhöhte Gebührensätze zu berechnen. Daher ist bevorzugt, daß zumindest ein Teil der Signalgeber Informationen über die Autobahnnummer und/oder die Art der Straße, d.h. die Art des Geländes, wie Hoch- oder Mittelgebirge, Tunnel oder Ebene übertragen und daß die Erfassungseinheit diese Daten zusammen mit den fahrspurspezifischen Wegstreckendaten speichert. Alternativ oder zusätzlich zu einer getrennten Speicherung der Art der Straße und der Wegstreckeninformation kann anhand eines beispielsweise in einem ROM abgelegten Programms sofort die angefallene Gebühr ausgerechnet und angezeigt und/oder gespeichert werden. Selbstverständlich können gleichzeitig der Zeitpunkt des Erreichens und des Verlassens der mehrspurigen Straße erfaßt werden, so daß auch in den Verkehrsspitzenzeiten erhöhte Straßenbenutzungsgebühren erhoben werden können.

In einer als zweckmäßig erkannten Weiterbildung wird die Verweildauer des Fahrzeuges auf derselben Spur erfaßt. Liegt sie unter einem vorgegebenen Minimum wird dann die erhöhte Gebühr, nämlich die der linken benachbarten Spur berechnet. Gleichzeitig oder alternativ ist ein entsprechender Hinweis an den Fahrer möglich. Auf diese Weise werden kurzfristige Spurwechsel auf die rechte Spur nicht honoriert, so daß kein Anreiz zum sofortigen Einscheren nach einem Überholvorgang besteht. Das "Kolonnenspringen nach rechts" sowie kurzzeitige Spurenwechsel werden bei der geschilderten Vorgehensweise unterbunden.

Um ein zu dichtes Auffahren hintereinander angeordneter Fahrzeuge derselben Fahrspur zu vermeiden, wird in einer Weiterbildung die Aussendung eines Zusatzcodes vorgeschlagen, der für ein gewisses Zeitintervall nach einem Lesevorgang vom Signalgeber ausgesandt wird und der beim Empfang entweder einen Hinweis für den Fahrer oder eine erhöhte Gebührenberechnung auslöst. Das Intervall, in dem die Aussendung des Zusatzcodes geschieht, bestimmt in Abhängigkeit von der Geschwindigkeit den Sollabstand zum vorausfahrenden Fahrzeug. Sobald der Zusatzcode im nachfolgenden Fahrzeug registriert wird, hat es den Sollabstand unterschritten und es erfolgt ein entsprechender Hinweis an den Fahrer und/oder die Abbuchung einer erhöhten Gebühr.

Um den Überholvorgang sicherer zu gestalten, wird vorgeschlagen, im Fahrzeug eine seitlich wirkende Sende-/Empfangseinheit einzubauen, die es erlaubt, die Geschwindigkeit des überholten Fahrzeuges zu ermitteln und im überholenden Fahrzeug auszuwerten. Dort wird daraufhin auf der Grundlage der eigenen Geschwindigkeit und der des überholten Fahrzeuges der Sicherheitsabstand ermittelt, der beim Einscheren auf die rechte Bahn einzuhalten ist. Wird beim Einscheren der Sicherheitsabstand unterschritten, erhält der Fahrer einen entsprechenden Hinweis und/oder eine erhöhte Gebühr wird abgebucht. Die Vorrichtung kann auch dazu genutzt werden, durch Rückrechnung denjenigen Sicherheitsabstand zu ermitteln, der bei Einleiten des Überholvorganges hätte eingehalten werden müssen. Die Genauigkeit des auf diese Weise ermittelten Sicherheitsabstandes ist zur oben angegebenen Alternativen wesentlich präziser, da in die Berechnungen sowohl die Geschwindigkeit des überholten als auch des überholenden Fahrzeuges eingehen. Die Sende/Empfangseinheit arbeitet beispielsweise mit Infrarot oder mit Funkwellen.

Als Signalgeber sind elektromagnetisch arbeitende Sender zweckmäßig, die vorzugsweise in der Mitte der Fahrspur angeordnet sind. Eine am Boden des Kraftfahrzeugs montierte Antenne erfaßt die elektromagnetischen Wellen beim Vorbeifahren und führt sie dem Empfänger zu. Der Vorteil besteht neben einer vom Fahrbahnzustand und von der Witterung unabhängigen Funktion darin, daß die Fahrspur und/oder die Nummer bzw. Position des Signalgebers anhand unterschiedlicher Signale detektierbar sind.

Im speziellen ist empfohlen, daß die Signalgeber batterielos arbeitende, digitale Daten übermittelnde Transponder sind. Nähert sich ein Kraftfahrzeug dem Signalgeber, wird er durch von einer Antenne am Fahrzeugboden abgestrahlte Signale zum Senden digitaler Daten angeregt, die der Empfänger auswertet. Derartige Transponder sind, da sie batterielos arbeiten, wartungsfrei und bereits kommerziell erhältlich.

Als besonders preiswerte Signalgeber sind Permanentmagnete und/oder ferromagnetische Metallstücke bevorzugt, die ebenfalls vorzugsweise in die Mitte der Fahrspur eingebracht sind. Die Kraftfahrzeuge sind mit zur Detektion der Signalgeber geeigneten Empfängern versehen und führen der Erfassungseinrichtung beim Vorbeifahren an einem Signalgeber jeweils einen Zählimpuls zu. Als Empfänger dient beispielsweise eine am Fahrzeugboden montierte Induktionsschleife, Hallsonde oder ein LC-Schwingkreis, wobei beim Vorbeifahren an einem Permanentmagneten an der Induktionsschleife oder an der Hallsonde ein Spannungsimpuls anliegt, während sich die Frequenz des LC-Schwingkreises beim Passieren eines ferromagnetischen Metallstücks ändert. Die vorgeschlagenen Signalgeber zeichnen sich durch Abnutzungs- und Wartungsfreiheit sowie Witterungsunabhängigkeit aus.

Weiterhin sind passive, optisch arbeitende Signalvorrichtungen empfohlen, die einen Licht- oder Infrarotstrahl, der von einer am Kraftfahrzeug montierten Infrarot- oder Lichtquelle stammt, reflektieren. Die Reflektoren sind beispielsweise an bereits vorhandenen, seitlich an den Autobahnen und Kraftfahrstraßen aufgestellten Baken montiert. Die Lichtquellen und Empfänger sind zumindest an einer Längsseite des Kraftfahrzeugs angebracht, wobei der Empfänger beim Vorbeifahren den von der Lichtquelle emittierten, reflektierten Lichtstrahl erfaßt und der Erfassungseinheit eine Wegstrecken information zuführt. Als besonders vorteilhaft ist anzusehen, daß an beiden Seiten des Kraftfahrzeugs montierte Empfänger die Erfassung dreier unterschiedlicher Fahrspuren ermöglichen: Bei Benutzung der linken Spur ist der auf der linken Fahrzeugseite positionierte Empfänger aktiv, fährt das Fahrzeug auf der rechten Fahrspur, empfängt der auf der rechten Seite montierte Empfänger Signale. Auf der mittleren Spur hingegen liegen an keinem der Empfänger Ausgangsimpulse an. Weiterhin sind die niedrigen Gestehungskosten der Signalgeber und der ebenfalls kommerziell erhältlichen Lichtquellen und Empfänger vorteilhaft.

Um die Straßenbenutzungsgebühren leicht abrechnen zu können, werden die von der Erfassungseinheit gespeicherten Daten vorteilhafterweise auf eine Magnet- oder Chipkarte geschrieben. Die jeweils anfallenden Gebühren können beispielsweise im Rahmen der TÜV-Prüfung oder der Abgas-Sonderuntersuchung beglichen werden.

An Auf- und Ausfahrten mehrspuriger Straßen sind zweckmäßigerweise spezielle Auf- oder Ausfahrtssignalgeber montiert. Beim Vorbeifahren an einem Auffahrtssignalgeber aktiviert der Empfänger die Erfassungseinheit, d.h. die Wegstreckeninformationen werden erfaßt und aufaddiert. Falls das Kraftfahrzeug die mehrspurige Straße an einer Ausfahrt verläßt, schaltet der Empfänger die Erfassungseinheit ab.

Die Auf- und/oder Ausfahrtssignalgeber unterscheiden sich vorzugsweise von den übrigen, auf den Fahrspuren montierten Signalgebern dadurch, daß sie in einem anderen, vorzugsweise kürzeren Abstand positioniert sind, so daß ihre Detektion anhand eines Vergleiches des zeitlichen Abstandes des Empfanges zweier Signale mit der Kraftfahrzeuggeschwindigkeit unproblematisch ist. Eine derartige Anordnung bietet sich vornehmlich bei Signalgebern an, die keine Information über ihre Positionierung oder ihre Nummer ausstrahlen.

Alternativ ist vorgeschlagen, als Auf- und/oder Ausfahrtssignalgeber elektromagnetische Sender einzusetzen, die von den Signalen der auf den Fahrspuren verwendeten Signalgebern abweichende Signale, vorzugsweise Daten abstrahlen.

Die Daten können vorteilhafterweise positionsabhängig sein, d.h. die Nummer der Straße oder der Auf- und/oder Ausfahrt enthalten. Durch die Speicherung beider Nummern kann eine vom jeweiligen Streckenabschnitt abhängige Straßenbenutzungsgebühr erhoben werden; anhand dieser Daten ist außerdem eine Verifikation der von der Erfassungseinheit gespeicherten Wegstreckeninformation und/oder eine Bestimmung der auf der Straße zurückgelegten Gesamtstrecke möglich. Durch eine Aufzeichnung der Nummern der Straßen lassen sich statistische Aussagen, beispielsweise über das Verkehrsaufkommen auf den einzelnen Autobahnen oder bestimmten Streckenabschnitten gewinnen.

Weiterhin ist empfohlen, den Abstand der Signalgeber etwa der Länge eines typischen Überholvorganges anzupassen, sie also in einer Entfernung von 200 bis 400 m zu positionieren.

Unterschreitet die Geschwindigkeit des Fahrzeugs einen Schwellenwert von beispielsweise 50 km/h, wird die Wegstreckeninformation zweckmäßigerweise der am weitesten rechts liegenden Fahrbahn zugeordnet. Alternativ dient eine von den Signalgebern ausgestrahlte Sollgeschwindigkeit als Schwellenwert; sie kann lokal in Abhängigkeit von der Streckenbeschaffenheit variieren. Bei einem Stau ist den Kraftfahrzeugführern somit möglich, alle Fahrspuren auszunutzen, ohne für die linke Fahrbahn einen erhöhten Tarif entrichten zu müssen.

Schließlich wird vorgesehen, die Signalgeber mit einer Zentrale in Verbindung zu setzen, die es erlaubt, die Art, Form und Zeitabstand der abgestrahlten Signale unterschiedlich einzustellen und zu verändern. Mit Hilfe dieser Zentrale wird es möglich, nach Art eines Leitsystemes den Verkehr zu beeinflussen und zu steuern. So können verkehrspolitisch bedeutsame Einflußnahmen im Sinne einer Leitung und Führung des Verkehrs in optimaler Weise vorgenommen werden. Als Beispiele werden genannt niedrige Gebührenerhebungen während der Nachtstunden, erhöhte Gebühren während der Rush-Hour. Es kann die Einhaltung von Richt- oder Höchstgeschwindigkeiten örtlich begrenzt und/oder spurabhängig vorgenommen werden; die Geschwindigkeitsbeschränkungen auf den einzelnen Spuren differenziert eingestellt werden (Überholspur größere Geschwindigkeit); die Einhaltung von Überholverboten; die Überprüfung des Sicherheitsabstandes zum vorausfahrenden Fahrzeug als auch beim Überholen sowie eine effiziente Überprüfung des Rechtsfahrgebotes. Weiter können Maßnahmen durch geführt werden, die temporärer Natur sind und beispielsweise durch eine Baustelle erforderlich werden; auch können temporäre Überlastungen des Streckennetzes abgefangen werden, zeitliche und örtliche Änderungen der Höchstgeschwindigkeiten oder des Überholverbotes vorgenommen werden; Witterungsbedingte Einschränkungen des Verkehrsflusses durch Ausbildung von Glatteis, Nebel und Schneeglätte Berücksichtigung finden. Gleiches gilt für saisonale Änderungen der Gebühren, wie z.B. ein erhöhter Tarif während der Reisezeit und während der Belastungsspitzen. Die Realisierung kann durch eine drahtgebundene oder drahtlose Übertragung zwischen den Sende/Empfangseinheiten und der Zentrale erfolgen. Die beschriebene verkehrspolitische Einflußnahme geschieht allein über das Gebührenerfassungssystem und erfordert nicht die Verwendung weiterer zusätzlicher Instrumente.

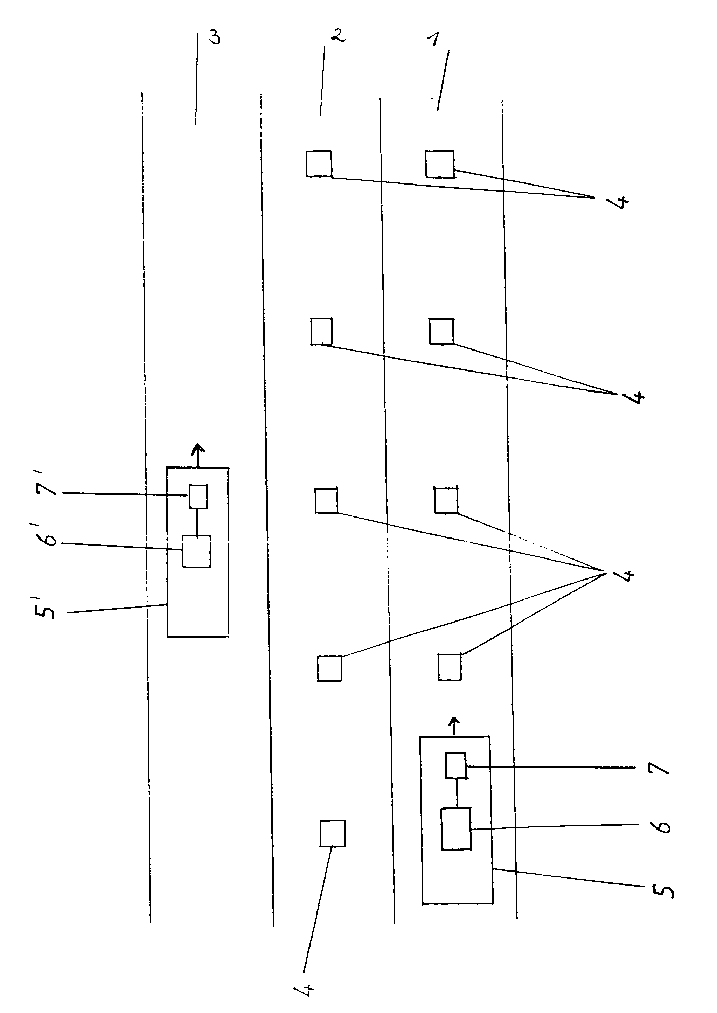

Weitere Einzelheiten, Merkmale und Vorteile der Erfindung lassen sich dem nachfolgenden Beschreibungsteil entnehmen, in dem anhand der Zeichnung eine Ausführungsform der Erfindung näher erläutert wird.

Sie zeigt in schematischer Darstellung einen Ausschnitt einer erfindungsgemäßen Anlage in Draufsicht.

Auf einer von links nach rechts verlaufenden, mit drei Fahrspuren (1, 2, 3) versehenen Autobahn sind die rechte (1) und die mittlere Fahrspur (2) mit äquidistanten Signalgebern (4) versehen. In den Kraftfahrzeugen (5) vorzugsweise am Boden angeordnete Empfänger (6) erfassen beim Vorbeifahren die von den Signalgebern (4) abgestrahlten Signale und führen der ablesbaren Erfassungseinheit (7) fahrspurspezifische Wegstreckeninformationen zu. Ein in einem auf der mittleren (3) oder auf der rechten Fahrspur (4) fahrenden Kraftfahrzeug (5) angeordneter Empfänger (6) erkennt anhand der empfangenen Signale die Lage der Fahrspur und die jeweils zurückgelegte Wegstrecke. Fährt das Kraftfahrzeug (5') jedoch auf der zur Reduzierung der Investitionskosten nicht mit Signalgebern (4) versehenen, linken Fahrspur (3), erfaßt der Empfänger (6') keine Signale. Die der linken Fahrspur (3) zuzuordnende Wegstreckeninformation wird, falls das Fahrzeug - spätestens beim Verlassen der Autobahn - die mittlere Fahrspur (2) erreicht, anhand der seit dem Verlassen der mittleren Fahrspur (2) zurückgelegten Wegstrecke mittels des Geschwindigkeitsmessers des Kraftfahrzeugs berechnet. Alternativ wird die Nummer des zuletzt erfaßten Signalgebers (4) gespeichert und die Wegstrecke anhand der Differenz der gespeicherten und der danach detektierten Nummer ermittelt.

Im Ergebnis erhält man eine Anlage zur Erfassung der auf einer mit Gebühren beaufschlagten Straße zurückgelegten Wegstrecke, die sich durch Präzision, sichere Funktion sowie niedrige Investitionskosten auszeichnet.

## Patentansprüche

1. Anlage zur Erfassung der von einem Kraftfahrzeug, in dem ein Wegstreckenmesser vorhanden ist, auf einer gebührenpflichtigen, mehrspurigen Straße zurückgelegten Wegstrecke mit außerhalb des Fahrzeugs befindlichen Signalgebern sowie einem Empfänger zur Aufnahme drahtloser Signale und einer Erfassungseinheit, die im Fahrzeug angeordnet sind, wobei
- der Signalgeber (4) ein Positionssatellit ist oder
die Signalgeber (4) in oder an der Straße montiert sind und der Empfänger (6) beim Vorbeifahren an einem Signalgeber (4) die Signale aufnimmt, die auf den einzelnen Fahrspuren (1,2,3) unterschiedlich sind und/oder die Signalgeber (4) auf jeder einzelnen Fahrspur (1,2,3) äquidistant, jedoch auf den unterschiedlichen Fahrspuren (1,2,3) in abweichenden Abständen angeordnet sind,
- die Erfassungseinheit (7) die jeweils benutzte Fahrspur (1,2,3) entweder anhand der Art und/oder Zahl der empfangenen Signale oder anhand der Art und/oder Zahl der empfangenen Signale und mittels des Wegstreckenmessers erkennt
- und die Erfassungseinheit (7) die zurückgelegte Wegstrecke und/oder die angefallenen Gebühren ermittelt und speichert, wobei die Wegstrecke nach Fahrspuren differenziert erfaßt wird, die mit unterschiedlichen Gebühren beaufschlagt sind.

2. Anlage nach Anspruch 1, wobei die Signalgeber (4) äquidistant angeordnet und in auf- oder absteigender Reihenfolge numeriert sind und eine Information über ihre Nummern ausstrahlen.

3. Anlage nach Anspruch 1 oder 2, wobei mindestens eine Fahrspur (1,2,3) nicht mit Signalgebern versehen ist und die Erfassungseinheit diese Fahrspur anhand fehlender Signale erkennt.

4. Anlage nach einem der Ansprüche 1 bis 3, wobei die Erfassungseinheit (7) die Geschwindigkeit des Kraftfahrzeugs (5) speichert.

5. Anlage nach Anspruch 4, wobei die Erfassungseinheit (7) die Wegstrecke nach Geschwindigkeitsintervallen differenziert speichert.

6. Anlage nach Anspruch 4 oder 5, wobei die Erfassungseinheit (7) die Geschwindigkeit anhand der Zahl und/oder Art der empfangenen Signale und der zwischen dem Empfang zweier Signale verstrichenen Zeitintervall erkennt.

7. Anlage nach einem der Ansprüche 1 bis 6, wobei die Signalgeber (4) die Richtgeschwindigkeit und/oder Überholverbot und/oder die Nummern der Straße und/oder Angaben über die Art der Straße ausstrahlen, und daß die Erfassungseinheit (7) die empfangenen Daten speichert und/oder zur Gebührenerfassung heranzieht.

8. Anlage nach einem der Ansprüche 1 bis 7, wobei die Verweildauer auf einer Fahrspur erfaßt wird und, sofern die Verweildauer unter einem vorgebbaren Minimum liegt, die Gebührenermittlung so erfolgt, als ob die links hiervon benachbarte Fahrspur benutzt worden wäre.

9. Anlage nach einem der Ansprüche 1 bis 8, wobei die Signalgeber (4) nach einem Lesevorgang für ein bestimmtes Zeitintervall einen Zusatzcode aussenden, der bei Empfang einen Hinweis und/oder eine erhöhte Gebührenberechnung auslöst.

10. Anlage nach einem der Ansprüche 1 bis 9, wobei das Fahrzeug eine seitlich wirkende Sende-/Empfangseinheit aufweist, die der Geschwindigkeitserfassung des überholten Fahrzeuges dient und hieraus den Sicherheitsabstand errechnet, und einen Hinweis und/oder eine erhöhte Gebührenabrechnung auslöst, sofern mit einem unter dem Sicherheitsabstand liegenden Abstand eingeschert wird.

11. Anlage nach einem der Ansprüche 1 bis 10, wobei die Signalgeber (4) elektromagnetische Signale abstrahlen und vorzugsweise in oder Mitte der Fahrspur angeordnet sind.

12. Anlage nach Anspruch 11, wobei die Signalgeber (4) batterielos arbeitende, digitale Daten übermittelnde Transponder sind.

13. Anlage nach einem der Ansprüche 1 bis 12, wobei die Signalgeber (4) Permanentmagnete und/oder ferromagnetische Metallstücke und vorzugsweise in der Mitte der Fahrbahn montiert sind.

14. Anlage nach einem der Ansprüche 1 bis 6, wobei die Signalgeber (4) Reflektoren für Licht- oder Infrarotstrahlung und vorzugsweise seitlich der Fahrbahn an Baken montiert sind, daß das Kraftfahrzeug (5) Licht- oder Infrarotquellen aufweist und daß der Empfänger (6) bevorzugt in der Nähe der Lichtquelle montiert ist.

15. Anlage nach einem der Ansprüche 1 bis 14, wobei die von der Erfassungseinheit (7) gespeicherten Daten auf eine Magnet- oder Chipkarte eingetragen werden.

16. Anlage nach einem der Ansprüche 1 bis 15, wobei der Empfänger (6) die Erfassungseinheit (7) beim Passieren von Auffahrtssignalgebern, die vorzugsweise an Auffahrten montiert sind, aktiviert.

17. Anlage nach einem der Ansprüche 1 bis 16, wobei der Empfänger (6) die Erfassungseinheit (7) beim Vorbeifahren an Ausfahrtsignalgebern, die bevorzugt an Ausfahrten montiert sind, abschaltet.

18. Anlage nach Anspruch 16 oder 17, wobei die Auf- und/oder Ausfahrtsignalgeber in einem Abstand angeordnet sind, der von dem Abstand der Signalgeber (4) auf der Straße abweicht.

19. Anlage nach Anspruch 16 oder 17, wobei die Auf- und/oder Ausfahrtsignalgeber elektromagnetische Signale, vorzugsweise Daten abstrahlen, die von den Signalen der Signalgeber (4) auf der Straße abweichen.

20. Anlage nach Anspruch 19, wobei die Auf- und/oder Ausfahrtsignalgeber positionsabhängige Daten, insbesondere die Nummer der Straße abstrahlen.

21. Anlage nach einem der Ansprüche 1 bis 20, wobei die Signalgeber (4) in einem Abstand von 200 bis 400 m angeordnet sind.

22. Anlage nach einem der Ansprüche 1 bis 21, wobei die Erfassungseinheit (7) die Wegstreckeninformation bei Unterschreitung eines Geschwindigkeitsschwellenwertes oder einer anhand der Signalgeber (4) erfaßten Sollgeschwindigkeit der am weitesten rechts liegenden Fahrbahn zuordnet.

23. Anlage nach einem der Ansprüche 1 bis 22, wobei die Signalgeber (4) mit einer Zentralen in Verbindung steht, die die abgestrahlten Signale unterschiedlich einzustellen gestattet.

## Claims

1. System for recording the stretch of road travelled by a motor vehicle provided with an odometer on a toll, multilane road having signal transmitters located outside the vehicle as well as a receiver for the reception of wireless signals and an acquisition unit which are disposed in the vehicle wherein
- said signal transmitter (4) is a positioning satellite
or
said signal transmitters (4) are installed in the road or by the roadside and said receiver (6) receives the signals when driving past a signal transmitter (4), which are different on the individual lanes (1, 2, 3) and/or said signal transmitters (4) are disposed in an equidistant manner on each individual lane (1, 2, 3), but are disposed at differing distances on the individual lanes (1, 2, 3),
- said acquisition unit (7) detects the respective lane (1, 2, 3) used by means of the type and/or number of the signals received or by means of the type and/or number of the received signals and using the odometer
- and said acquisition unit (7) determines and stores the stretch of road travelled and/or the incurred charges, whereby the stretch of road is recorded in a differentiated manner according to the lanes which are imposed with different charges.

2. System according to claim 1 wherein said signal transmitters (4) are disposed in an equidistant manner and are numbered in an ascending or descending order and emit information on their numbers.

3. System according to claim 1 or 2, wherein at least one lane (1, 2, 3) is not provided with signal transmitters and said acquisition unit detects this lane through the missing signal.

4. System according to one of claims 1 to 3 wherein said acquisition unit (7) stores the speed of motor vehicle (5).

5. System according to claim 4, wherein said acquisition unit (7) stores the stretch of road in a differentiated manner according to speed intervals.

6. System according to claim 4 or 5, wherein said acquisition unit (7) detects the speed by means of the number and/or type of received signals and the time interval elapsed between the reception of two signals.

7. System according to one of claims 1 to 6, wherein said signal transmitters (4) emit the recommended speed and/or an overtaking ban and/or the road numbers and/or information on the road type and said acquisition unit (7) stores the received data and/or utilises it for charge registration.

8. System according to one of claims 1 to 7, wherein the sojourn time on one lane is recorded and, in so far as the sojourn time is less than a specifiable minimum, charges are determined as if the adjacent lane to the left thereof had been used.

9. System according to one of claims 1 to 8 wherein said signal transmitters (4) transmit an additional code for a specific time interval after a reading operation which when received triggers an advice notification and/or a higher charge calculation.

10. System according to one of claims 1 to 9, wherein the vehicle has a sending/receiving unit which acts laterally which serves to record the speed of the overtaken vehicle and calculates therefrom the safe distance, and triggers an advice notification and/or higher charge calculation, in so far as the vehicle cuts in at a distance less than the safe distance.

11. System according to one of claims 1 to 10, wherein said signal transmitters (4) emit electromagnetic signals and are preferably disposed in the centre of the lane.

12. System according to claim 11, wherein said signal transmitters (4) are transponders that transmit digital data and function without batteries.

13. System according to one of claims 1 to 12, wherein said signal transmitters (4) are permanent magnets and/or ferromagnetic metal pieces and are preferably installed in the centre of the lane.

14. System according to one of claims 1 to 6, wherein said signal transmitters (4) are reflectors for luminous or infrared radiation and are mounted preferably laterally to the lane on distance markers and said receiver (6) is preferably installed in proximity to the light source.

15. System according to one of claims 1 to 14, wherein the data stored by said acquisition unit (7) is entered onto a magnet or chip card.

16. System according to one of claims 1 to 15, wherein said receiver (6) activates said acquisition unit (7) when it passes entrance signal transmitters, which are preferably installed on entrance ramps.

17. System according to one of claims 1 to 16, wherein said receiver (6) deactivates said acquisition unit (7) when driving pass exit signal transmitters, which are preferably installed on exit ramps.

18. System according to claim 16 or 17, wherein the entrance or exit signal transmitters are disposed at a distance which deviates from the distance of signal transmitters (4) on the road.

19. System according to claim 16 or 17, wherein the entrance and/or exit signal transmitters emit electromagnetic signals, preferably data which deviates from the signals of said signal transmitters (4) on the road.

20. System according to claim 19, wherein the entrance and/or exit signal transmitters emit position-dependent data, especially the number of road.

21. System according to one of claims 1 to 20, wherein said signal transmitters (4) are disposed at a distance of 200 to 400 m.

22. System according to one of claims 1 to 21, wherein said acquisition unit (7), if the speed falls below a speed threshold or by means of a target speed recorded by said signal transmitters (4), assigns the route information to the lane that lies furthest to the right.

23. System according to one of claims 1 to 22, wherein said signal transmitters (4) are connected to a central unit which allows the signals emitted to be set differently.

## Revendications

1. Installation pour la saisie de la distance parcourue par un véhicule dans lequel un compteur de la distance parcourue est présent sur une route soumise à des droits de passage et ayant plusieurs voies avec des postes transmetteurs de signaux à l'extérieur du véhicule ainsi qu'un récepteur pour la réception de signaux sans fil et une unité de saisie de données disposés dans le véhicule,
- le poste transmetteur de signaux (4) étant un satellite de position ou bien
- les postes transmetteurs de signaux (4) étant montés dans la route ou sur les côtés et le récepteur (6) captant les signaux quand un véhicule passe un poste transmetteur de signaux (4), signaux qui sont pour chacune des voies (1, 2, 3) différents et/ou les postes transmetteurs de signaux (4) étant disposés de façon équidistante les uns des autres sur chacune des voies (1, 2, 3) tout en présentant des intervalles différents sur chacune des voies (1, 2, 3),
- l'unité de saisie (7) reconnaissant chacune des voie (1, 2, 3) empruntées ou bien par le type et/ou le nombre de signaux captés ou par le type et/ou le nombre des signaux captés et à l'aide du compteur de la distance parcourue
- et l'unité de saisie (7) calculant et stockant la distance parcourue et/ou les droits de passage à payer, la distance parcourue étant saisie différemment selon les voies qui sont soumises à différents droits de passage.

2. Installation selon la revendication 1, pour laquelle les postes transmetteurs de signaux (4) sont installés de façon équidistante les uns des autres et sont numérotés en ordre croissant ou décroissant et émettent une information sur leur numéro.

3. Installation selon la revendication 1 ou 2, pour laquelle au moins une des voies (1, 2, 3) n'est pas munie de postes transmetteurs de signaux et l'unité de saisie reconnaît cette voie en raison de l'absence de signaux.

4. Installation selon une des revendications 1 à 3, pour laquelle l'unité de saisie de données (7) stocke la vitesse du véhicule (5).

5. Installation selon la revendication 4, pour laquelle l'unité de saisie de données (7) stocke la distance parcourue de façon différenciée selon les intervalles de vitesse.

6. Installation selon la revendication 4 ou 5, pour laquelle l'unité de saisie (7) reconnaît la vitesse par le nombre et/ou le type des signaux captés et par l'intervalle de temps écoulé entre la réception de deux signaux.

7. Installation selon une des revendications 1 à 6, pour laquelle les postes transmetteurs de signaux (4) émettent la vitesse recommandée et/ou des interdictions de dépasser et/ou le numéro de la route et/ou des informations sur le type de route et pour laquelle l'unité de saisie de données (7) stocke les données reçues et/ou en tient compte pour la saisie des droits de passage.

8. Installation selon une des revendications 1 à 7, pour laquelle la durée de séjour sur une voie est saisie et, si la durée de séjour est inférieure à un minimum prédéfinissable, le calcul des droits de passage a lieu comme si la voie de gauche voisine avait été empruntée.

9. Installation selon une des revendications 1 à 8, pour laquelle les postes transmetteurs de signaux (4) émettent, selon un processus de lecture, pour un intervalle de temps donné, un code supplémentaire qui, à la réception, déclenche un avertisseur et/ou la facturation des droits plus élevés de passage.

10. Installation selon une des revendications 1 à 9 pour laquelle le véhicule présente une unité émettrice/réceptrice qui sert à la saisie de la vitesse du véhicule dépassé et qui calcule alors la distance de sécurité et déclenche un avertissement et/ou la facturation des droits de passage plus élevés si le véhicule se rabat à une distance inférieure à la distance de sécurité.

11. Installation selon une des revendications 1 à 10, pour laquelle les postes transmetteurs de signaux (4) émettent des signaux électromagnétiques et sont disposés de préférence au milieu de la chaussée.

12. Installation selon la revendication 11 pour laquelle les postes transmetteurs de signaux (4) sont des transpondeurs travaillant sans pile et transmettant des données numériques.

13. Installation selon une des revendications 1 à 12 pour laquelle les postes transmetteurs de signaux (4) sont des aimants permanents et/ou des pièces métalliques ferromagnétiques et sont de préférence montés au milieu de la chaussée.

14. Installation selon une des revendications 1 à 6 caractérisée en ce que les postes transmetteurs de signaux (4) sont des réflecteurs de rayons lumineux ou infrarouges et sont montés de préférence aux balises sur les bas-côtés de la route et que le véhicule (5) présente une source lumineuse ou infrarouge et que le récepteur est monté de préférence près de la source lumineuse.

15. Installation selon une des revendications 1 à 14 pour laquelle les données stockées par une unité de saisie sont transférées sur une carte magnétique ou une carte à puce.

16. Installation selon une des revendications 1 à 15 pour laquelle le récepteur (6) connecte l'unité de saisie (7) quand le véhicule passe un des postes transmetteurs de signaux d'entrée montés de préférence à l'entrée de la route.

17. Installation selon une des revendications 1 à 16 pour laquelle le récepteur (6) déconnecte l'unité de saisie (7) quand le véhicule passe devant des ??? postes transmetteurs de signaux de sortie qui sont montés de préférence à la sortie de la route.

18. Installation selon la revendication 16 ou 17 pour laquelle les postes transmetteurs de signaux d'entrée et/ou de sortie sont installés à un intervalle différent de celui des postes transmetteurs de signaux (4) installés sur la route.

19. Installation selon la revendication 16 ou 17 pour laquelle les signaux d'entrée et/ou de sortie sont des signaux électromagnétiques et émettent de préférence des données différentes des signaux des postes transmetteurs de signaux (4) installés sur la route.

20. Installation selon la revendication 19 pour laquelle les postes transmetteurs de signaux d'entrée et/ou de sortie émettent des données (proportionnelles), en particulier le numéro de la route.

21. Installation selon une des revendications 1 à 20 pour laquelle les postes transmetteurs de signaux (4) sont installés à un intervalle de 200 à 400 m.

22. Installation selon une des revendications 1 à 21 pour laquelle l'unité de saisie de données (7) attribue l'information de la distance parcourue quand la vitesse est inférieure à une valeur seuil de vitesse ou l'attribue à la voie la plus à droite en raison de la vitesse saisie par les postes transmetteurs de signaux (4).

23. Installation selon une des revendications 1 à 22 pour laquelle les postes transmetteurs de signaux (4) sont en connexion avec une centrale qui permet de régler différemment les signaux émis les uns par rapport aux autres.
